# EUROPEAN PATENT APPLICATION

(11) **EP 2 568 384 A1**
(43) Date of publication of application: **13.03.2013**
(21) Application number: 11306100.6
(22) Date of filing: 06.09.2011
(51) Int. Cl.: G06F 11/34

(54) **Method, controller device and computer program for measuring energy efficiency of a multi blades system**

(71) Applicant: Alcatel Lucent, 75007 Paris (FR)
(72) Inventor: Lantoine, Eric, 22304 LANNION (FR); Fontaine, Romain, 22300 LANNION (FR)
(74) Representative: Benezeth, Philippe J.L. M.

(57) **Abstract**

The present invention provides a method for measuring the energy efficiency of an electronic System Under Test, or SUT, through a controller device using a benchmark software product. The benchmark software product comprises a Server Side Java or SSJ workload program designed to exercise different components of said SUT, a Power Daemon adapted to control a power analyzer connected to said SUT, and a Control and Collect System, or CCS, adapted to control said SSJ workload program and to receive collection of data from said SUT. Said SUT being a multi-blades System, said method comprises the steps of: determining at the controller device an associated IP address for each blade of said multi-blades System; sequentially loading said SSJ workload program in each blade, sequentially launching the execution of said SSJ workload program in all blades with requests sent by the CCS by using associated IP addresses determined for all blades, collecting data relative to energy efficiency from said SUT and said power Daemon during the execution of the SSJ workload program running in parallel in all blades. The present invention provides also the associated controller device and computer program.

## Description

### FIELD OF THE INVENTION

The present invention relates generally to a method and device for measuring the energy efficiency of multi blades systems.

### BACKGROUND OF THE INVENTION

Many telecommunication operators request for providing specific performance of energy efficiency on the devices and systems proposed by manufacturers. The power consumption is a good commercial parameter for comparing different hardware solutions provided by different manufacturers. Telecommunication operators ask for use of specific private held measurement software suite to deliver adequate proof of energy efficiency on such bids. This software suite or benchmark product, known as SPECPower_ssj 2008 rev. 1.00, has been specified by the Standard Performance Evaluation Corporation (SPEC), which is a consortium of companies and is designed to provide a view of a server system's power consumption.

The benchmark product consists essentially of the three following software components:
- a Server Side Java or SSJ-Workload which is a Java program designed to exercise different components of the System Under Test (or SUT), such as the CPU(s), memory or caches;
- a Power and Temperature Daemon or PTD for controlling a power analyzer and a temperature sensor during measurement intervals to a system other than the SUT;
- a Control and Collect System or CCS, which is a Java application controlling and enabling the collection of data from the SUT, the power analyzer and the temperature sensor.

In addition to the SUT, four hardware and/or software devices are needed for collecting the SUT's power consumption and performance by exercising the SUT with a predefined workload with this benchmark product:
- a controller device, to which the SUT is connected, that runs the CCS and the PTD;
- a power analyzer that measures and records the power consumed by the SUT;
- a temperature sensor that captures the SUT temperature's environment; and
- a director system, which can be run either on the SUT, or preferably on the controller device, and through which the controller device can control the SSJ-workload.

The temperature measurement is a requirement as part of a full benchmark report. For an objective comparison between the different SUTs, the ambient temperature during the execution of SSJ-workload does not have to be less than 20 degrees centigrade.

During the measurements, the SUT is supplied through the power analyzer. The power analyzer and the temperature sensor are connected to the controller device via a communication link such as RS 232 or USB. The concurrent instances of PTD for the communication with the power analyzer and the temperature sensor are run by using specific run scripts. The network interface of the SUT is connected to the controller device so as to establish a TCP/IP connection with the controller device. The SSJ-workload is stored in the file system of the SUT. The SUT is identified by its IP address and receives a SSJ running command through the use of this address.

The benchmarking product as currently provided is adapted for energy efficiency measurement of individual servers' enclosures, having a single IP address. In this case, each server not only hosts the micro-processors but also the cooling unit, AC/DC power conversion, storage media and HW management entity. Measuring the energy efficiency of one server will generally suffice to properly extrapolate to a large configuration composed of several co-localized servers, as only a few to no extra hardware elements are present that may compromise the efficiency rating.

However, in the case of blade systems or Advanced Telecommunications Computing Architecture (ATCA) shelve enclosures, a clear limitation of the benchmark product appears because no implementation exists for a multi-blades system using several processing blades.

A known solution consists in equipping an ATCA shelf with only one processing blade and in launching the SSJ running by using the single IP address of this blade. The energy consumption is then extrapolated by adding a determined part of the energy consumption corresponding to the absent blades. However, the shared elements necessary to the shelf operation (cooling unit, network blades...) consume a non negligible amount of power, difficult to predict as intimately dependant on the number of processing blades present in the shelf, of the CPU applied workload and finally of the ambient temperature. Hence, extrapolating to the entire shelf behavior is a non accurate prediction method, given the unpredictable nature of the cooling system and its relatively high weight over the total power consumption.

Therefore, there is a need for an accurate method for measuring the energy efficiency of an ATCA or blade system equipped with several processing blades through the use of the benchmark product.

### SUMMARY OF THE INVENTION

According to an embodiment, a method for measuring the energy efficiency of an electronic System Under Test, or SUT, through a controller device using a benchmark software product. The benchmark software product comprises at least a Server Side Java or SSJ workload program designed to exercise different components of said SUT, at least a Power Daemon, or PTD, adapted to control a power analyzer connected to said SUT, and a Control and Collect System, or CCS, adapted to control said SSJ workload program and to receive collection of data from said SUT. Said SUT being a multi-blades system, said method comprises the steps:
- determining at the controller device an associated IP address for each blade of said multi-blades system,
- sequentially loading said SSJ workload program in each blade,
- sequentially launching the execution of said SSJ workload program in all blades with requests sent by said CCS by using associated IP addresses determined for all blades,
- collecting data relative to energy efficiency from said SUT and said power Daemon during the execution of the SSJ workload program running in parallel in all blades.

This disposition is particularly useful for an ATCA and blade systems like hardware platforms, sharing a common cooling, management system and Ethernet switching hubs along with a variable number of processing blades where each micro-processor is to be driven in term of workload by the measurement software.

According to another embodiment, said determining step comprises a step of scanning the network connected to said SUT in order to determine all IP addresses available in said SUT. In this manner, just before launching the test, the script can determine all the blades present and ready to test in the multi blades system.

At the end of the scanning step, the number of determined IP addresses may be advantageously displayed to an operator, and said operator may enter a command of validation to continue the energy efficiency measurement of SUT. In this manner, the user can check the number of blade present and ready to test in the multi blades system.

According to another embodiment, the collecting step consists in measuring power consumption while making the processing load of the processing blades vary in the same way. In this manner, the measures are more detailed and the characteristics of SUT are more precise.

The processing load preferably varies from a maximum processing load to a zero processing load. In this manner, the test begins by giving out at maximum heat and then reducing the production of heat. The efficiency of the cooling system is thus also tested.

According to another embodiment, the method comprises a step of measuring an environment temperature, the measurement of power consumption being validated if the measured temperature is comprised between two thresholds. In this manner, the test conditions are well-defined.

According to another embodiment, each processing blade is equipped with a plurality of cores of processor, and the method comprises a step of introducing a number of cores by blade, SSJ workload program is loaded and executed in each blade core. In this manner, the whole of blade processing unit can be completely workloaded.

In another embodiment, a controller device for measuring the energy efficiency of an electronic System Under Test, SUT is provided. Said controller device uses a benchmark software product comprising a Server Side Java or SSJ workload program designed to exercise different components of said SUT, at least a Power Daemon, or PTD, adapted to control a power analyzer connected to said SUT, and a Control and Collect System, or CCS, adapted to control said SSJ workload program and to receive collection of data from said SUT, said SUT being a Multi-blades System, said controller device comprises :
- means for determining an associated IP address for each blade of said multi-blades system,
- means for sequentially loading said SSJ workload program in all blades,
- means for sequentially launching the execution of SSJ workload program in all blades with requests using associated IP addresses determined for all blades,
- means for collecting data relative to energy efficiency from said SUT and said power Daemon during the execution of the SSJ workload program running in parallel in all blades.

In another embodiment, a computer program product is provided. Said computer program benchmark product comprises computer-executable instructions for measuring energy efficiency of an electronic System Under Test, SUT, said computer benchmark software product comprising a Server Side Java or SSJ workload program designed to exercise different components of said SUT, at least a Power Daemon, or PTD, adapted to control a power analyzer connected to said SUT, and a Control and Collect System, or CCS, adapted to control said SSJ workload program and to receive collection of data from said SUT, characterized in that said instructions are adapted to perform :
- determining a plurality of IP addresses each associated with a blade of a multi blades SUT,
- sequentially loading said SSJ workload program in all blades,
- sequentially launching the execution of SSJ workload program in all blades by using the determined IP addresses,
- collecting data relative to energy efficiency from said SUT and said power Daemon during the execution of the SSJ workload program running in parallel in all blades.

### BRIEF DESCRIPTION OF THE DRAWINGS

Some embodiments of device and/or methods in accordance with embodiments of the present invention are now described, by way of example only, and with reference to the accompanying drawings, in which:
Figure 1 schematically represents a physical overview of the test setup adapted to implement an embodiment of the invention;
Figure 2 represents a software architecture of SPECpower of the hardware elements used for measuring the energy efficiency of a SUT adapted to implement an embodiment of the invention;
Figure 3 illustrates the main exchanges between controller device and SUT for network boot sequence in accordance with an embodiment of the invention;
Figure 4 represents a detailed flowchart illustrating example operation of the script used for multi-IP based system Energy efficiency measurement;
Figure 5 illustrates the main exchanges between controller device and SUT for SPECpower script sequence in accordance with an embodiment of the invention.

### DETAILED DESCRIPTION OF EXAMPLE EMBODIMENTS

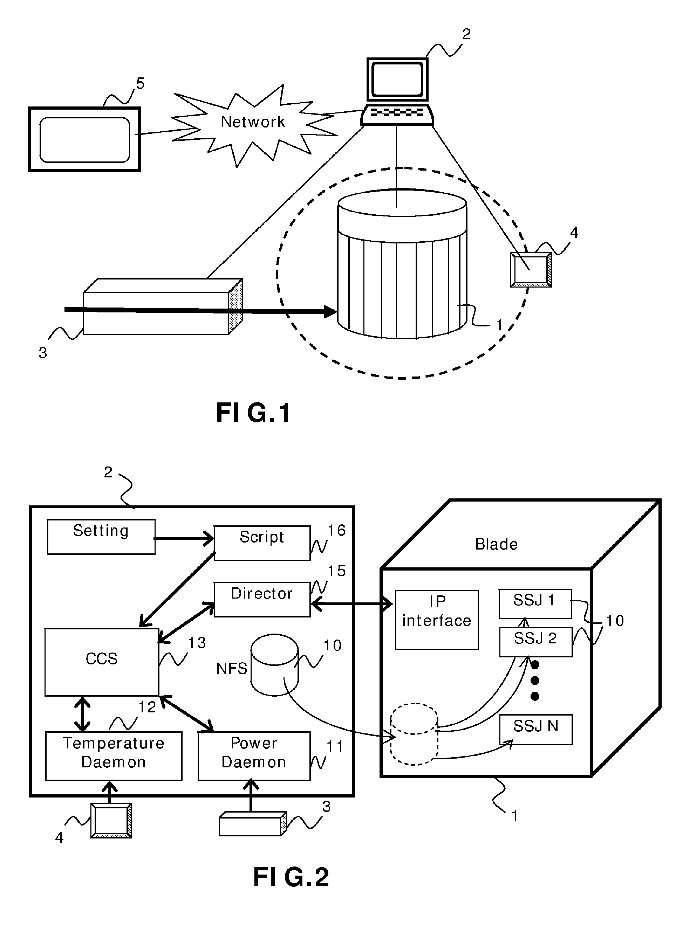

FIGS. 1-5 and the following description depict specific exemplary embodiments of the invention to teach those skilled in the art how to make and use the invention. For the purpose of teaching inventive principles, some conventional aspects of the invention have been simplified or omitted. Those skilled in the art will appreciate variations from these embodiments that fall within the scope of the invention. Those skilled in the art will appreciate that the features described below can be combined in various ways to form multiple variations of the invention. As a result, the invention is not limited to the specific embodiments described below, but only by the claims and their equivalents.

Figure 1 schematically represents a physical overview of the test setup for the present invention according to an example of embodiment. The test setup comprises four hardware devices:
- Server Under Test (SUT) 1 which is the system that will be driven by SSJ workloads. The SUT's performance and power consumption characteristics will be captured and measured by a benchmark software product.
- A controller device 2 which is a separate device that runs and/or stores the different modules of the benchmark software product.
- A power analyzer 3 which is used to measure and record the power consumed by SUT 1 through an appropriate current probe.
- a temperature sensor 4 which is used to capture the temperature of the environment where SUT 1 is being benchmarked.

SUT 1 is supplied through the power analyzer. Power analyzer 3 communicates with controller device 2 through a connection, such as RS-232 or USB. Temperature sensor 4 is also connected to controller device 2 through a USB connection. SUT 1 communicates with controller device 2 via TCP/Internet Protocol and is identified by its IP addresses.

According to an embodiment, SUT 1 may be an Advanced Telecommunications Computing Architecture (ATCA). SUT 1 may also be a multi-blade system like hardware platform, sharing a common cooling, management system and Ethernet switching hubs along with a variable number of processing blades where each micro-processor is to be driven in term of workload by the measurement software.

Figure 2 represents the software architecture of SPECpower benchmark product used for measuring the energy efficiency of SUT 1. Said benchmark software product comprises at least the following modules within said controller device 2:
- A Server Side Java (SSJ) workload program 10, designed to exercise the processing unit(s), caches, memory, the scalability of shared memory processors, JVM (Java Virtual Machine) implementations, JIT (Just In Time) compilers, garbage collection, and other aspects of the operating system of SUT 1. SSJ workload program is stored in the system disk of controller device 2 and loaded in each blade of SUT 1 for the energy efficiency measuring.
- A Power Daemon 11 and a Temperature Daemon 12 (PTDaemon).
   The Power and Temperature Daemons are to offload the work of controlling power analyzer 3 and temperature sensor 4 during measurement intervals to a system other than SUT 1.
- A Control and Collect System (CCS) 13, including a visual interface shown by a screen 5 connected to controller device 2 such as illustrated by the figure 1. CCS is a multi-threaded Java application that controls and enables the coordinated collection of data from multiple data sources such as a workload running on SUT 1, a power analyzer, and a temperature sensor. The interface is a plurality of software package designed to display activity from one, two, or three SUT's simultaneously, in combination the temperature daemon, the power daemon, the script, Director, or other software modules.
- A Director module 15 which allows communication between controller device 2 and SUT 1. Director module 15 can be loaded either on the SUT's OS (local mounting) or remotely on controller device 2. This latter case is preferred, as only one instance is necessary whatever the number of SUTs 1 or blades to drive through TCP/IP. Even when the director is set remotely, it has only one IP address through which it can allocate and set up the different SSJ JVM needed to load each core of the SUT 1.

While the Spec-Power advocate for doing so, the software suite itself is to be considered as a collection of modules to be included in a global SW environment capable of addressing multiple IP instances corresponding to as many blades as necessary. The communications and processing between controller device 2 and SUT 1 are defined in a script 16 stored in controller device 2. This script allows driving multiple IP addresses system associated with SUT 1 and launching sequentially the SSJ into each blade of SUT 1.

According to a preferred embodiment, the software architecture of controller device 2 is based on usage of a Linux kernel, a Network File System (NFS) mounting along with as many Secure Shell communications (SSH) as the number of IP addresses considered. NFS provides unique file-system image synchronization for all blades, which file system includes the necessary Spec-Power modules controlled by a specific script also part of the invention. SSJs 10 stored in the file system of controller device 2 are loaded in each blade of SUT 1.

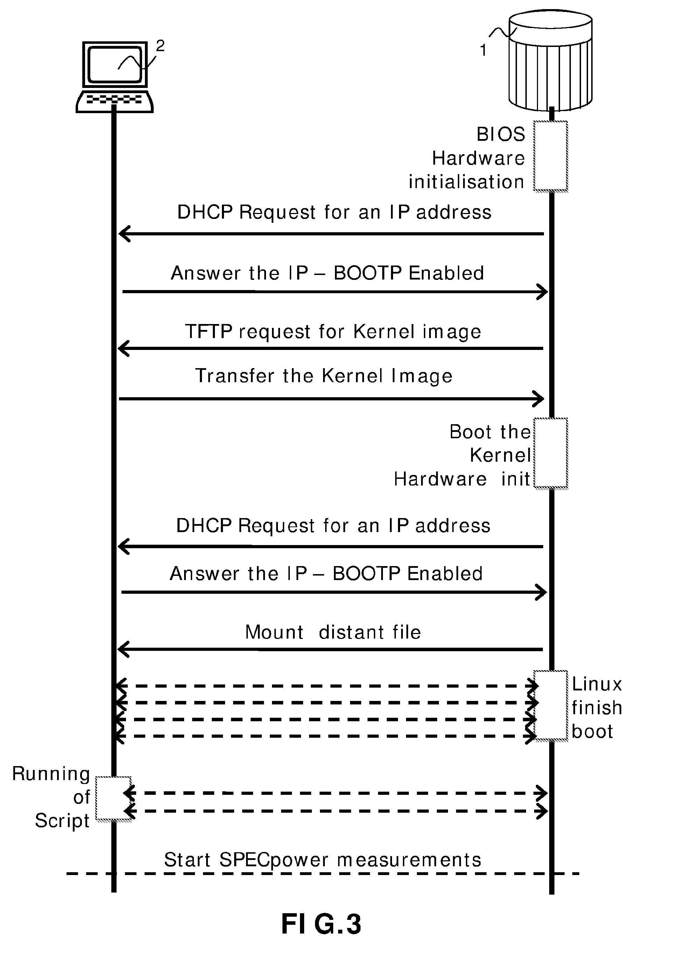

Figure 3 illustrates the main exchanges between controller device 2 and SUT 1 for network boot sequence. After SUT 1 has been switched on, each blade launches its BIOS hardware. Each blade of SUT 1 sends a DHCP request for an IP address. Controller device 2 responds by sending an IP address and by authorizing the BOOTP launching. Then, each blade of SUT 1 sends a TFTP request for Kernel image. Controller device 2 responds by transferring the requested Kernel image. The kernel is loaded and executed in each blade of SUT 1. At this step, the operating system of each blade needs to be loaded. According to an embodiment, the operating system is Linux. Each blade of SUT 1 sends another time a DHCP request for an IP address. Controller device 2 responds by sending the same IP address and by authorizing the BOOTP launching. Then, each blade of SUT 1 sends a Mount distant file request for loading Linux.

Once Linux has been loaded in all blades, SUT 1 is operational and can load any application executable in SUT 1. At this time, controller device 2 may decide to launch the script of SPECpower measurements.

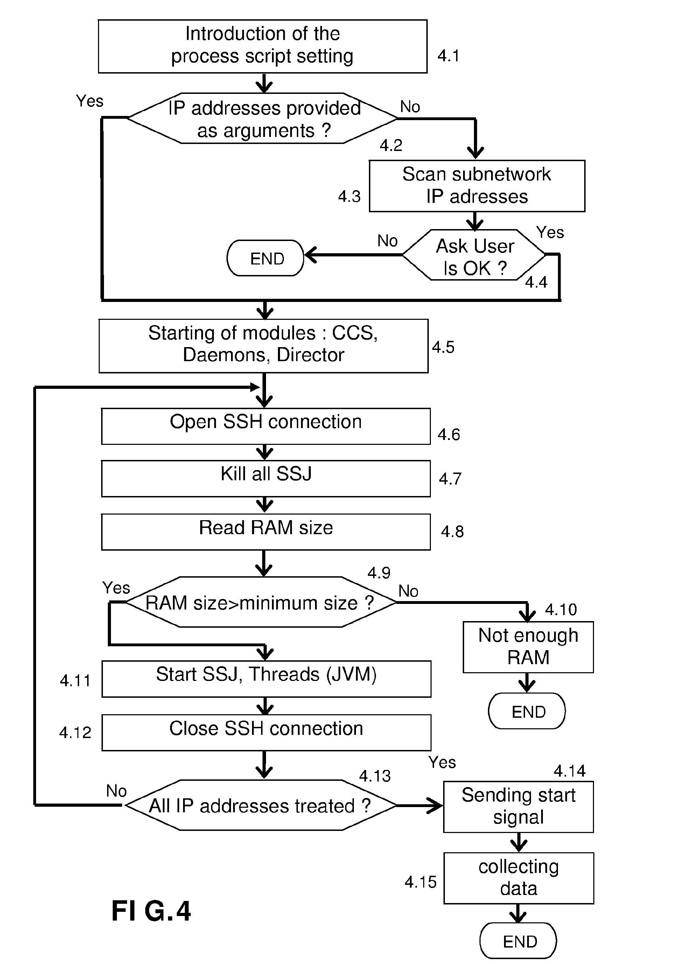

Figure 4 represents a detailed flowchart illustrating example operation of the script used for multi-IP based system energy efficiency measurement.

At step 4.1, an operator introduces settings of the test. The settings may comprise minimum RAM amount needed for the test, number of SSJ by blade, JAVA machine to be used, number of cores in each blade, ... At this stage, two possibilities are given through the script for determining an IP address which will uniquely identify each blade of SUT 1: The script allows the user to give the list of IP addresses as an argument to launch a test on SUT 1. This bypasses the need to perform an IP scan. Then, the script checks if IP addresses have been provided as arguments (step 4.2). If No, the script scans sub network for retrieving the IP addresses (step 4.3) and the list of blade IP addresses is created. After the scan, the script displays the number of retrieved IP addresses corresponding to the number of found blades. The user can control the displayed number and the script gives the possibility to stop the test to the operator (step 4.4). If the operator does not enter a command of validation, the script is ended.

If the response is "Yes" at step 4.2, the software modules of benchmark software product (CCS, PTDaemons, Director, ...) are executed (step 4.5). At this time, the script comprises a loop to sequentially load and launch SSJ in each blade by using its associated IP address. A SSH connection is opened with a blade by using the determined IP address (step 4.6). At step 4.6, controller device 2 sends a request to kill all SSJ that would be active yet. This step allows launching the test with a blade loaded with the SSJ workload program only. Then, at step 4.8, the script reads the RAM size available in the Blade. The script compares the RAM size with a minimum size and determines if the RAM size is sufficient for the test (step 4.9). If the RAM size is not sufficient for the test, this information is displayed for the operator at step 4.10, and the script is ended.

If the RAM size of the blade is sufficient for the test, the script loads and starts the SSJ (step 4.11). The loading and the running of SSJ is executed by the same command. After that, the blade is ready for the test, the SSJ waits the starting signal for workloading the blade processing unit. At the end of the loop, SSH connection is closed with this blade by using the same associated IP address (step 4.12). At step 4.13, the script checks if it remains other blades to treat. If so, the script loops to step 4.6 for another blade. Else, at step 4.14, the script sequentially launches the execution of said SSJ workload program in all blades with requests sent by the Control and Collect System by using associated IP addresses determined for all blades. To this end, a start signal is sequentially sent to each blade in a very short time (less than 100 milliseconds) so that the SSJ workload program runs in parallel in all blades without a great time shift. Then, the script collects data relative to energy efficiency from said SUT 1 and said power Daemon during the execution of the SSJ workload program running in parallel in all blades (step 4.15).

According to an embodiment, SSJs begin to workload the processing unit of each blade at 100%. During the SSJ running, the workloading of the processing unit decreases by steps of 10% (90%, 80%, ...) until 0 %. At 0% of workloading, the blade is in idle mode. Each step last a determined time, for example 240 seconds. Since SSJ workload program has been started in all blades in a very short time, each step runs approximately at the same time in all blades. The measurements arise during all the step duration so that the processing units of each blade execute the same step at the time of measurement.

When the parallel executions of the SSJ workload program are ended, CCS calls another software module : the reporter. The reporter extracts all of the benchmark data created by SSJs and formats this data into several human-readable files. The reporter may use the power and performance data to create graphs for each blade, as well as for the overall script run in general. The human-readable files may be displayed by a screen of controller device 2, or of distant desktop 5.

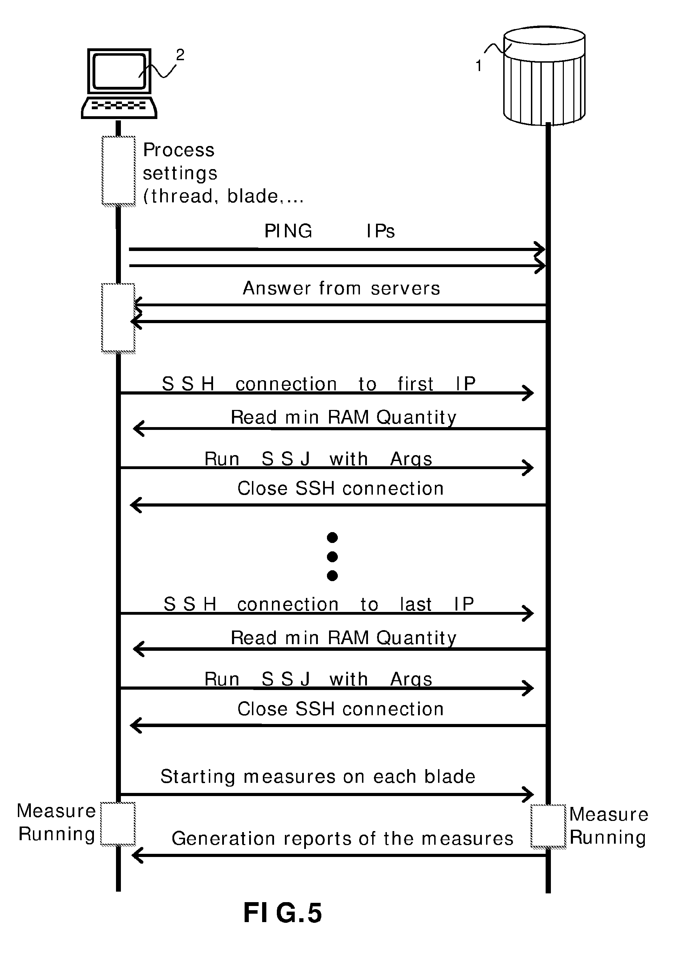

Figure 5 illustrates the main exchanges between controller device 2 and SUT 1 during the script running. At first, an operator introduces settings of the test (minimum RAM amount, number of SSJ by blade, JAVA machine to be used, number of cores in each blade, ...). If no IP address is provided as arguments, controller device 2 scans SUT 1 for retrieving the IP addresses. The script uses this functionality to know which blades are present and ready at this time. This step is useful to check if a blade has been removed since the initialization of SUT 1 illustrated by the figure 3. Each blade sends to controller device 2 the allocated IP address defined during the initialization of SUT 1. In this manner, the operator acknowledges the number of detected blades and the script can start.

Then, software modules of benchmark software product (CCS, PTDaemons, Director, ...) are executed and the loop to sequentially load and launch SSJ in each blade by using associated IP addresses determined for all blades is executed. The following operations are then performed on each blade by using its associated IP address:
- performing a SSH connection between device controller 2 and the blade,
- killing all remaining SSJ (from previous tests),
- checking if the RAM size of the blade is sufficient for the test,
- starting the SSJs instances (SSJ then waits the start signal),
- closing the SSH connection.

After the loading and launching of SSJ in all blades, the measures can be launched. The start signal is sequentially sent to each blade in a very short time by using associated IP addresses and the measurement can run. At the end of the measurement, a report is created and displayed to the operator.

According to an embodiment, blades processing unit comprises a plurality of cores. The number of cores is introduced in the settings at step 4.1 of the detailed flowchart of Figure 4. Each blade core has to be loaded with SSJ workload program. This loading is carried out for each blade at step 4.11. In this manner, the whole of blade processing unit can be completely workloaded.

According to another embodiment, the temperature daemon extracts the environment temperature of SUT 1 from temperature sensor 4. The measurement of power consumption is validated if the measured temperature is higher than a minimum threshold value. Typically, this threshold value is 20 °C.

Where a component is referred to above, unless otherwise indicated, reference to that component (including a reference to a "means") should be interpreted as a reference to any component which performs the function of the described component (i.e. is functionally equivalent to the described component), including components which are not structurally equivalent to the disclosed structure which performs the function in the illustrated exemplary embodiments of the invention.

Where a step in a method is referred to above, unless otherwise indicated, reference to that step should be interpreted as a reference to any step which achieves the same result as the step (i.e. is functionally equivalent to the described step), including steps which achieve a stated result in different ways from those disclosed in the illustrated exemplary embodiments of the invention. As will be apparent to those skilled in the art in the light of the foregoing disclosure, many alterations and modifications are possible in the practice of this invention.

## Claims

1. A method for measuring the energy efficiency of an electronic System Under Test, or SUT (1), through a controller device (2) using a benchmark software product comprising at least a Server Side Java or SSJ workload program (10) designed to exercise different components of said SUT, a Power Daemon, or PTD (11), adapted to control a power analyzer (3) connected to said SUT (1), and a Control and Collect System, or CCS (13), adapted to control said SSJ workload program (10) and to receive collection of data from said SUT (1),
**characterized in that**, said SUT being a multi-blades system, said method comprises the steps:
- determining (4.2 ; 4.3) at the controller device (2) an associated IP address for each blade of said multi-blades system,
- sequentially loading (4.11) said SSJ workload program (10) in each blade,
- sequentially launching (4.14) the execution of said SSJ workload program in all blades with requests sent by said CCS by using associated IP addresses determined for all blades,
- collecting (4.15) data relative to energy efficiency from said SUT and said power Daemon during the execution of the SSJ workload program (10) running in parallel in all blades.

2. Method according to claim 1, **characterized in that** said determining step comprises a step (4.3) of scanning the network connected to said SUT (1) in order to determine all IP addresses available in said SUT.

3. Method according to claim 2, **characterized in that** at the end of the scanning step, the number of IP addresses is indicated to an operator, said operator entering a command of validation (4.4) to continue the energy efficiency measurement of SUT (1).

4. Method according to any of claims 1 to 3, **characterized in that** the collecting step (4.15) consists in measuring power consumption while making the processing load of the processing blades vary in the same way.

5. Method according to claim 4, **characterized in that** the processing load of all processing blades varies from a maximum processing load to a zero processing load.

6. Method according to any of claims 4 to 5, **characterized in that** it comprises a step of measuring an environment temperature, the measurement of power consumption being validated if the measured temperature is higher than a predetermined threshold value.

7. Method according to any of the previous claims, **characterized in that** each processing blade is equipped with a plurality of cores of processor, said method comprising a step of introducing (4.1) a number of cores by blade, SSJ workload program (10) being loaded and executed in each blade core.

8. Controller device (2) for measuring the energy efficiency of a an electronic System Under Test, or SUT (1), by using a benchmark software product comprising a Server Side Java or SSJ workload program (10) designed to exercise different components of said SUT, at least a Power Daemon, or PTD (11), adapted to control a power analyzer (3) connected to said SUT, and a Control and Collect System, or CCS (13), adapted to control said SSJ workload program and to receive collection of data from said SUT,
**characterized in that**, said SUT being a Multi-blades System, said controller device (2) comprises :
- means (13, 15, 16) for determining an associated IP address for each blade of said multi-blades System,
- means (13, 15, 16) for sequentially loading said SSJ workload program (10) in all blades,
- means (13, 15, 16) for sequentially launching the execution of SSJ workload program in all blades with requests using associated IP addresses determined for all blades,
- means (13, 15, 16) for collecting data relative to energy efficiency from said SUT and said power Daemon during the execution of the SSJ workload program running in parallel in all blades.

9. Controller device (2) according to claim 8, **characterized in that** said means (13, 15, 16) for determining scans the network connected to said SUT (1) in order to determine all IP addresses available in said SUT.

10. Controller device (2) according to claim 9, **characterized in that** at the end of the scan, the number of IP addresses is indicated to an operator, said operator entering a command of validation (4.4) to continue the energy efficiency measurement of SUT (1).

11. Controller device (2) according to any of claims 8 to 10, **characterized in that** the collecting means (13, 15, 16) consists in measuring power consumption while making the processing load of the processing blades vary in the same way.

12. Controller device (2) according to claim 11, **characterized in that** the processing load of all processing blades varies from a maximum processing load to a zero processing load.

13. Controller device (2) according to any of claims 11 to 12, **characterized in that** it comprises a means of measuring an environment temperature, the measurement of power consumption being validated if the measured temperature is higher than a predetermined threshold value.

14. Controller device (2) according to any of claims 8 to 13, **characterized in that** each processing blade of said SUT is equipped with a plurality of cores of processor, said controller device comprising a means of introducing a number of cores by blade, SSJ workload program (10) being loaded and executed in each blade core.

15. A computer program benchmark product (10, 12, 13, 15, 16) comprising computer-executable instructions for measuring energy efficiency of an electronic System Under Test, or SUT (1), said computer benchmark software product comprising a Server Side Java or SSJ workload program (10) designed to exercise different components of said SUT, at least a Power Daemon (11), or PTD, adapted to control a power analyzer connected to said SUT, and a Control and Collect System (13), or CCS, adapted to control said SSJ workload program and to receive collection of data from said SUT, **characterized in that** said instructions are adapted to perform :
- determining (4.2, 4.3) a plurality of IP addresses each associated with a blade of a multi blades SUT,
- sequentially (4.11) loading said SSJ workload program in all blades,
- sequentially (4.14) launching the execution of SSJ workload program in all blades by using the determined IP addresses,
- collecting (4.15) data relative to energy efficiency from said SUT and said power Daemon during the execution of the SSJ workload program running in parallel in all blades.
